**Europäisches Patentamt**

**European Patent Office**

**Office européen des brevets**

(19)

(11) Numéro de publication: **0 082 029**
**B1**

(12)                    **FASCICULE DE BREVET EUROPEEN**

(45) Date de publication du fascicule du brevet:
**25.09.85**

(51) Int. Cl.⁴: **H 02 P 7/62**

(21) Numéro de dépôt: **82402018.4**

(22) Date de dépôt: **03.11.82**

(54) **Dispositif de correction de la tension alternative délivrée par un convertisseur de fréquence alimentant un moteur asynchrone ou synchrone.**

(30) Priorité: **15.12.81 FR 8123376**

(43) Date de publication de la demande:
**22.06.83 Bulletin 83/25**

(45) Mention de la délivrance du brevet:
**25.09.85 Bulletin 85/39**

(84) Etats contractants désignés:
**AT BE CH DE GB IT LI LU NL SE**

(56) Documents cités:
**US - A - 3 331 003**
**US - A - 3 402 336**
**US - A - 3 611 089**

**ELECTRONIC COMPONENTS & APPLICATIONS, vol. 3, no. 1, novembre 1980, pages 6-15, Eindhoven (NL); W.B. ROSINK: "Analogue control system for a.c. motor with PWM variable speed drive"**

(73) Titulaire: **LA TELEMECANIQUE ELECTRIQUE, 33 bis, avenue du Maréchal Joffre, F-92000 Nanterre (FR)**

(72) Inventeur: **Clenet, Daniel, Résidence Chateau Folie Avenue Frédéric Mistral, F-06130 Grasse (FR)**

(74) Mandataire: **Marquer, Francis, CABINET MOUTARD 35, avenue Victor Hugo Résidence Champfleury, F-78180 Voisins le Bretonneux (FR)**

# Description

L'invention se rapporte à l'alimentation des enroulements statoriques d'un moteur asynchrone ou synchrone par un montage comprenant un convertisseur de fréquence, en particulier du type à modulation de largeur d'impulsions et du type à mode de tension en créneaux.

Les convertisseurs à modulation de largeur d'impulsions comportent, selon un premier montage connu, six interrupteurs électroniques à transistors ou thyristors, montés en pont, l'ensemble étant alimenté par une tension continue. L'ensemble de ces interrupteurs assure la commutation des phases du moteur, tandis que trois (ou six, suivant les montages) des interrupteurs assurent la variation de la tension aux bornes des enroulements par une modulation de la largeur des créneaux engendrés par le montage.

Le convertisseur de fréquence est piloté par une tension de commande de fréquence variable fournie par un convertisseur tension-fréquence excité par une tension de référence réglable qui fixe ainsi la fréquence du champ tournant engendré par le stator. Cette tension de référence est également appliquée au régulateur de tension qui commande les interrupteurs de modulation, de façon à alimenter le moteur avec une tension croissant avec la fréquence.

Pour obtenir le couple utile nominal, il est indispensable de faire comporter au montage une compensation de la chute résistive dans le moteur, compensation qui sera d'autant plus nécessaire que la fréquence d'alimentation est plus basse.

Dans l'art antérieur, cette compensation est habituellement obtenue en effectuant un réglage spécifique pour chaque type de moteur utilisé.

La compensation consiste le plus souvent à augmenter la tension alternative appliquée au moteur alimenté par le convertisseur de fréquence lorsque le courant absorbé par le moteur augmente. Une autre solution connue consiste à modifier la loi de variation tension-fréquence du montage pour augmenter systématiquement la tension d'alimentation du moteur aux fréquences basses, d'une manière indépendante du courant effectivement consommé. Cette dernière solution, qui permet dans une certaine mesure d'éviter de devoir effectuer un réglage individuel pour chaque moteur, présente l'inconvénient majeur d'alimenter le moteur à vide sous une trop forte tension, d'où un échauffement anormal et la génération de couples pulsatoires.

L'invention a pour objet un dispositif de correction permettant l'alimentation correcte d'un moteur aux fréquences basses sans le suralimenter à vide, et utilisable sans nouveau réglage avec des moteurs asynchrones ayant des résistances statoriques différentes.

Elle propose plus précisément un dispositif de correction de la tension alternative délivrée par un convertisseur de fréquence alimentant un moteur asynchrone, ce convertisseur comportant, d'une façon analogue à celle décrite dans le brevet USA 3.331.033 ou dans la publication «Electronic Components & Applications, volume 3, numéro 1, Novembre 1980, pages 6 à 15», un pont d'interrupteurs électroniques commandés assurant au moins la commutation des phases du moteur, ce convertisseur étant contrôlé par un dispositif régulateur recevant une tension de consigne, de manière à fournir au moteur une tension alternative suivant une loi connue et comprenant:

— des moyens d'appliquer à une entrée du régulateur un signal apte à compenser grossièrement la chute résistive dans les enroulements du moteur pour le fonctionnement en charge, et

— des moyens de détecter le régime de fonctionnement du moteur à vide avec suralimentation.

Selon l'invention, ce dispositif est plus particulièrement caractérisé en ce que le signal de compensation est constitué par une polarisation fixe ou fonction du courant absorbé par le moteur et en ce que les moyens de détection du régime de fonctionnement à vide avec suralimentation sont des moyens sensibles à la dérivée du courant stator et susceptibles d'engendrer un signal de correction qui est retranché de ladite polarisation.

L'invention sera mieux comprise à l'aide de la description ci-après.

Au dessin annexé:

la fig. 1 est le schéma de principe d'un convertisseur de fréquence servant à l'alimentation d'un moteur asynchrone et équipé d'un dispositif de correction du courant absorbé, conforme à un mode d'exécution préféré de l'invention; et

la fig. 2 illustre la variation du courant absorbé par un moteur asynchrone en fonction du temps.

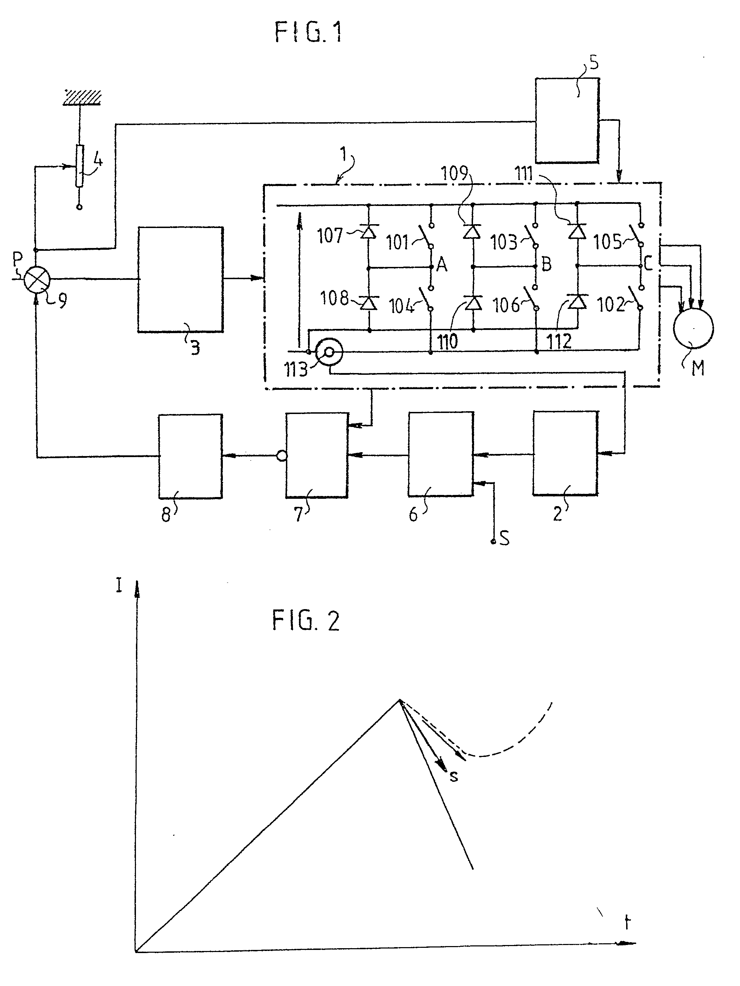

A la fig. 1, on a représenté schématiquement un convertisseur de fréquence 1 du type conforme au premier montage connu susvisé. Il comprend six interrupteurs, constitués par des thyristors ou des transistors, numérotés 101 à 106 et six diodes 107 à 112. Ce convertisseur constitue ce que l'on appelle un convertisseur à modulation de largeur d'impulsions.

Les interrupteurs 101 à 106 sont chargés d'assurer la commutation des phases du moteur M branché aux points A B C. Trois interrupteurs 101-103-105, par exemple, assurent en outre la variation de tension aux bornes du moteur. Le courant I absorbé par le stator est mesuré par un appareil de mesure 113 placé dans la ligne commune aux interrupteurs 104, 106, 102 et appliqué à un circuit dérivateur 2.

A titre de variante, le courant absorbé pourrait être prélevé aux bornes de sortie du montage.

De façon connue en soi, la tension alternative du moteur est fixé par un régulateur de tension 3 qui reçoit une tension de consigne réglable au moyen d'un potentiomètre 4. Cette tension de consigne est également appliquée à l'entrée d'un convertisseur tension-fréquence 5 dont la sortie pilote le convertisseur 1.

Suivant l'invention, la dérivée du courant I est appliquée à un comparateur 6 qui reçoit par ailleurs un seuil de tension S. Celui-ci peut être constitué, soit par une tension fixe, soit par une tension image du courant I dont la dérivée est fournie par le circuit 2.

La sortie du comparateur 6 est appliquée par l'intermédiaire d'une porte ET 7 validée lorsque les interrupteurs 101, 103 ou 105 sont ouverts, à un circuit 8 d'établissement de la valeur moyenne (circuit intégrateur), dont la sortie est elle-même appliquée à une entrée d'un circuit 9 additionneur-soustracteur. Ce dernier reçoit sur une autre entrée une tension fixe de polarisation P et, sur une troisième entrée, la tension de consigne. Le circuit 9 fournit à sa sortie la somme de la tension de consigne et de la tension de polarisation, diminuée de la tension de correction fournie par le circuit 8.

Pour faciliter la compréhension du fonctionnement du dispositif de correction qui vient d'être décrit, il faut rappeler que, lorsque l'un des interrupteurs 101, 103 ou 105 est fermé ainsi que l'un des interrupteurs 104, 106 ou 102, une tension positive est appliquée aux enroulements du moteur qui sont branchés aux interrupteurs conducteurs et le courant qui circule dans ces enroulements est croissant. Quand un interrupteur 101, 103 ou 105 se bloque, la diode 108, 110 ou 112 qui lui est associée se met à conduire pour assurer, avec l'interrupteur 104, 106 ou 102 resté conducteur, la continuité du courant. La tension appliquée à l'enroulement branché à cette diode et à cet interrupteur conducteur est alors nulle.

Si le moteur est correctement alimenté, pour le régime de charge auquel il est soumis, le courant est décroissant. Si, par contre, le moteur est suralimenté, le déphasage entre le courant et la tension de la machine peut être tel que le courant commence par décroître, passe par un minimum et croît jusqu'à égaler et même dépasser la valeur qu'il avait avant l'ouverture de l'interrupteur 101, 103 ou 105. En régime de charge, le déphasage entre le courant et la tension du moteur se modifie de telle sorte que la dérivée du courant, quand les interrupteurs 101, 103 ou 105 sont ouverts, a une valeur négative (courant décroissant) ou faiblement positive.

L'observation du signe et de l'amplitude de la dérivée du courant dans la branche commune aux interrupteurs 104, 106 ou 102 et aux diodes 108, 110 et 112 permet donc de distinguer le régime de marche à vide avec suralimentation et le régime de charge.

En effet, en régime de marche à vide normale, la dérivée est sensiblement égale au seuil S mentionné ci-dessus (elle peut être légèrement inférieure au seuil) quand les interrupteurs 101, 103 ou 105 sont ouverts et, en régime de marche à vide avec suralimentation, la dérivée devient supérieure au seuil (c'est-à-dire, moins négative ou même fortement positive).

A la fig. 2, on a représenté la variation du courant I en fonction du temps t, en régime de marche à vide; la courbe comprend une partie croissante qui correspond à l'état fermé des interrupteurs 101, 103, 105, suivie d'une partie décroissante qui correspond à l'état ouvert desdits interrupteurs. La portion de courbe en pointillé correspond à la marche à vide avec suralimentation. Le vecteur S correspond au seuil ci-dessus.

Si l'on examine maintenant le fonctionnement du montage de la fig. 1, il apparaît que, par suite du fait qu'une polarisation fixe P est ajoutée en permanence à la tension de référence, le moteur se trouve, en régime de charge, alimenté avec une tension sensiblement optimale. En effet, la polarisation P est ajustée de manière à compenser grossièrement la chute de tension dans la résistance statorique pour un moteur en charge. Aucun réglage individuel n'est effectué pour chaque moteur, mais on peut admettre que la compensation est en pratique satisfaisante pour tous les moteurs asynchrones. Le dispositif correcteur 2, 6, 7, 8 ne fournit aucun signal, puisque la dérivée est négative et inférieure au seuil S.

En régime de marche à vide, le moteur aura normalement tendance à être suralimenté, puisque la polarisation P est choisie pour fournir un courant convenable en charge; il en résulte que, la dérivée devenant supérieure au seuil dès que les interrupteurs 101, 103 ou 105 sont ouverts, la porte ET étant alors validée, le dispositif correcteur fournit un signal opposé à la polarisation P et proportionnel à l'écart entre la dérivée et le seuil et qui aura pour effet de réduire la tension d'alimentation jusqu'à ce que la suralimentation cesse.

La réalisation pratique des circuits que comporte le dispositif de correction décrit et représenté est à la portée de l'homme du métier et pourra faire l'objet de variantes. Le dispositif 3 sera constitué par tout moyen de commander le convertisseur de fréquence quel que soit son type; pour fournir une tension alternative convenable, le convertisseur de fréquence ou onduleur pourra être du type continu-alternatif ou alternatif-alternatif.

Un deuxième montage convertisseur de fréquence connu auquel s'applique particulièrement l'invention, dénommé hacheur-commutateur de tension, est celui qui comporte deux interrupteurs à transistors ou à thyristors en série avec un pont à thyristors, ces derniers n'assurant que la commutation des phases, tandis que l'un des hacheurs assure la variation de tension. Comme dans le cas du premier montage, la dérivée du courant absorbé pourra être utilisée pour asservir le régulateur de tension qui alimente le convertisseur. Ce type de convertisseur fait partie des convertisseurs à modulation de largeur d'impulsions.

L'invention peut également s'appliquer à un troisième montage connu, comprenant un hacheur fournissant une tension continue filtrée en série avec un pont comportant six interrupteurs électroniques commandés, ou à un quatrième montage à alimentation alternative, comprenant un redresseur commandé fournissant une tension continue filtrée, suivi d'un pont de six interrupteurs.

Dans tous ces montages, le courant, pour un moteur non suralimenté, est décroissant quand il circule dans un interrupteur et une diode ayant un même point commun avec la source d'alimentation et croissant si le moteur est suralimenté, et c'est cette propriété qui est utilisée dans le dispositif suivant l'invention.

## Revendications

1. Dispositif de correction de la tension alternative délivrée par un convertisseur de fréquence alimentant un moteur asynchrone ou synchrone, ledit convertisseur comportant un pont d'interrupteurs électroniques commandés (101 à 106) assurant au moins la commutation des phases du moteur (M), ledit convertisseur étant contrôlé par un dispositif régulateur (3) recevant une tension de consigne de manière à fournir au moteur une tension alternative suivant une loi connue, et comprenant des moyens (9) d'appliquer, à une entrée dudit régulateur (3), un signal apte à compenser grossièrement la chute résistive dans les enroulements du moteur pour le fonctionnement en charge, et des moyens (2, 6, 7) de détecter le régime de fonctionnement du moteur à vide avec suralimentation, caractérisé en ce que le signal de compensation est constitué par une polarisation (P) fixe ou fonction du courant absorbé par le moteur, et en ce que les moyens de détection (2, 6, 7) du régime de fonctionnement à vide avec suralimentation sont des moyens sensibles à la dérivée du courant stator et susceptibles d'engendrer un signal de correction qui est retranché de ladite polarisation (P).

2. Dispositif selon la revendication 1, caractérisé en ce que lesdits moyens de détection du régime de fonctionnement à vide avec suralimentation comprennent:
— des moyens de prélever un signal représentatif du courant absorbé par le moteur;
— des moyens (2) de dériver ledit signal;
— des moyens (6) de comparer la dérivée à un seuil (S);
— des moyens (7) de valider le signal résultant de cette comparaison à chaque fois que la tension appliquée à l'un quelconque des enroulements du moteur est nulle;
— des moyens (8) d'élaborer une tension apte à faire baisser la tension appliquée au moteur en fonction dudit signal validé.

3. Dispositif selon l'une des revendications 1 ou 2, caractérisé en ce que ledit seuil (S) est constitué par une tension variable représentative du courant absorbé par le moteur.

## Patentansprüche

1. Vorrichtung zur Korrektur der von einem Frequenzwandler gelieferten Wechselspannung zur Speisung eines Asynchron- oder Synchronmotors, wobei besagter Frequenzwandler eine Brücke elektronisch gesteuerter Schalter (101 bis 106) besitzt, die mindestens die Phasenschaltung des Motors (M) bewerkstelligt und besagter Frequenzwandler von einer Regelvorrichtung (3) gesteuert wird, welche eine Referenzspannung erhält, um dem Motor, gemäss einem bekannten Gesetz, eine Wechselspannung zu liefern, und Mittel (9) besitzt, um einem ersten Eingang besagten Regulators (3) ein Signal anzulegen, welches den Widerstandsabfall in den Motorwindungen bei Betrieb unter Belastung in etwa kompensiert, und Mittel (2, 6, 7), um die Betriebsweise des unbelasteten Motors bei Aufladung festzustellen, dadurch gekennzeichnet, dass das Kompensationssignal durch feste Polarisierung (P) oder durch eine Polarisierung je nach dem vom Motor aufgenommenen Strom gebildet wird und die Mittel (2, 6, 7) zur Feststellung der unbelasteten Betriebsweise bei Aufladung Mittel sind, die auf die Ableitung des Statorstromes ansprechen und die ein Korrektursignal hervorbringen, das von besagter Polarisierung (P) abgezogen wird.

2. Vorrichtung nach Anspruch 1, dadurch gekennzeichnet, dass die Mittel, um die unbelastete Betriebsweise bei Aufladung zu erfassen, beinhalten:

— Mittel, um ein Signal zu entnehmen, welches für den vom Motor aufgenommenen Strom repräsentativ ist,
— Mittel (2), um besagtes Signal abzuleiten,
— Mittel (6), die Ableitung mit einem Schwellenwert (S) zu vergleichen,
— Mittel (7), um das Signal, welches sich aus diesem Vergleich ergibt, gültig zu machen, wenn die an eine Motorwindung angelegte Spannung Null ist,
— Mittel (8), um eine Spannung zu erzeugen, die, je nach dem gültig gemachten Signal, die an den Motor angelegte Spannung verringert.

3. Vorrichtung nach Anspruch 1 oder 2, dadurch gekennzeichnet, dass besagter Schwellwert (S) von einer variablen Spannung, welche repräsentativ ist für den vom Motor aufgenommenen Strom, gebildet wird.

## Claims

1. A device for correcting the alternating voltage supplied by a frequency converter feeding an asynchronous or synchronous motor, said converter comprising a controlled electronic switch bridge (101 to 106) effecting at least the switching of the motor (M) phases, said converter being controlled by a regulating device (3) receiving a reference voltage so as to provide the motor with an alternating current according to a known law, and comprising means (9) for applying at one input of said regulator (3) a signal adapted to roughly compensate the resistive drop in the windings of the motor for operation under charge and means (2, 6, 7) for detecting the operating mode of the motor without load under supercharging, characterized in that the compensation signal is formed by a biasing (P) which is either fixed or variable as a function of the current absorbed by the motor and in that the detecting means (2, 6, 7) of the operating mode without load under supercharging are sensitive to the derivative of the stator current and adapted to generate a correction signal subtracted from said biasing (P).

2. A device according to claim 1, characterized in that said means detecting the operating mode without load under supercharging comprise:

— means for picking up a signal representative of the current absorbed by the motor,

— means (2) for deriving said signal,

— means (6) for comparing the derivative to a threshold (S),

— means (7) for validating the signal resulting from this comparison each time the voltage applied to any one of the windings of the motor is zero,

— means (8) for generating a voltage adapted to bring about a drop of the voltage applied to the motor as a function of said validated signal.

3. A device according to claim 1 or 2, characterized in that said threshold (S) is formed by a variable voltage representative of the current absorbed by the motor.

# FIG. 1

# FIG. 2